# EUROPÄISCHE PATENTSCHRIFT

(11) **EP 1 846 678 B1**
(45) Veröffentlichungstag und Bekanntmachung des Hinweises auf die Patenterteilung: **22.04.2009**
(21) Anmeldenummer: 06707673.7
(22) Anmeldetag: 06.01.2006
(51) Int. Cl.: F16K 27/04, F16K 31/06

(54) **VERSCHLUSSVORRICHTUNG**
CLOSING DEVICE
DISPOSITIF OBTURATEUR

(30) Priorität: 02.02.2005 DE 102005004679; 27.07.2005 DE 102005034985
(43) Veröffentlichungstag der Anmeldung: 24.10.2007
(73) Patentinhaber: Continental Teves AG & Co. oHG, 60488 Frankfurt (DE)
(72) Erfinder: VOSS, Christoph, 60386 Frankfurt Am Main (DE); COURTH, Christian, 60439 Frankfurt Am Main (DE)
(86) Internationale Anmeldenummer: PCT/EP2006/050066
(87) Internationale Veröffentlichungsnummer: WO 2006/082120

(56) Entgegenhaltungen:
- WO-A-20/04053243
- DE-A1- 10 010 734
- US-A- 5 975 654

## Beschreibung

Die Erfindung betrifft eine Verschlussvorrichtung zum Verschließen von druckmittelführenden Kanälen in einem Gehäuse nach dem Oberbegriff des Patentanspruchs 1.

Eine Verschlussvorrichtung ist beispielsweise aus der DE 196 43 289 A1 bekannt. Die Verschlussvorrichtung besteht aus einem patronenförmigen Verschlusskörper, der in eine Aufnahmebohrung eines Gehäuses druckmitteldicht eingesetzt wird, wobei zur Abdichtung des Verschlusskörpers in die für den Verschlusskörper vorgesehenen Aufnahmebohrung mehrere elastische Dichtringe in Umfangsnuten des Verschlußkörpers angeordnet sind. Infolge der Vielzahl der erforderlichen Bearbeitungs- und Montageschritte ist das angegebene Abdichtkonzept als nachteilig zu bewerten.

Eine Verschlussvorrichtung der im Oberbegriff des Patentanspruchs 1 angegebenen Bauart ist aus der WO 2004/053243 A1 bekannt. Die Verschlussvorrichtung ist als sanitäres Einbauteil ausgeführt, mit einem mehrwandig ausgestalteten Einbaugehäuse, das in eine sanitäre Wasserleitung einsetzbar und zumindest zwei einander benachbarte Gehäusewandungen hat, die zwischen sich einen Wandungsinnenraum umschließen. Die äußere Gehäusewandung ist schlauchförmig ausgeführt, wozu die Mantelfläche des Schlauchkörpers zur Abdichtung abschnittsweise über zwei Ringwülste verfügt, die unter einer definierten Flächenpressung zwischen der Aufnahmebohrung in der Wasserleitung und dem Einbaugehäuse angeordnet sind. Zur einwandfreien Abdichtung sind die Ringwülste gummiringartig in jeweils eine Nut der innen liegenden Gehäusewandung aufgenommen, wobei sich die schlauchförmige Gehäuseaußenwandung auf einem flanschförmigen Gehäuseabsatz des Einbaugehäuses abstützt. Das Abdichtkonzept ist entsprechend aufwendig.

Ferner geht aus US 5,975,654 eine Verschlussvorrichtung für ein Ventil hervor, mit einem patronenförmigen Verschlusskörper, der mittels einer Verstemmung in der Aufnahmebohrung eines Gehäuses druckmitteldicht befestigt ist. Diese Befestigungsart erfordert die besonders präzise Einhaltung enger Fertigungs- und Ausdehnungstoleranzen. Ferner ist zwischen dem Verschlusskörper und dem in die Aufnahmebohrung einmündenden Eingangskanal ein Plattenfilterelement angeordnet, das überdies als Halteteil für eine im Verschlusskörper angeordnete Druckfeder dient. Das durch die Plattenfilterbauart zwangsläufig scheibenförmig gestaltete Halteteil greift mit seinem Stehkragen in eine Hinterschneidung an der Unterkante des Verschlusskörpers, sodass nach Wunsch oder Bedarf eine formschlüssige oder nicht-formschlüssige Befestigung zwischen dem Verschlusskörper und dem Halteteil zustande kommt.

Aus DE 100 10 734 A1 ist eine Verschlussvorrichtung für ein Ventil bekannt, dessen patronenförmiger Verschlusskörper in die Aufnahmebohrung eines Gehäuses druckmitteldicht eingesetzt ist, wozu einerseits zwischen dem Verschlusskörper und dem Gehäuse ein Dichtring und andererseits zwischen dem Gehäuse und dem Verschlusskörper ein Haltekragen vorgesehen ist, der mittels einer Verstemmung innerhalb der Aufnahmebohrung fixiert ist. Aufgrund des hierfür erforderlichen Herstellaufwands ist dieses Abdichtkonzept nicht von Vorteil.

Der vorliegenden Erfindung liegt daher die Aufgabe zugrunde, eine Verschlussvorrichtung der eingangs beschriebenen Art zu schaffen, die sich unter dem Gesichtspunkt der einwandfreien Abdichtung durch eine vereinfachte, kostengünstigere und sichere Herstellung auszeichnet, wobei besonderer Wert auf ein vertauschungssichere, beschädigungsfreie Montage unter großzügiger Tolerierung von Fertigungs- und Montagetoleranzen gelegt wird.

Diese Aufgabe wird bei einer Verschlussvorrichtung der eingangs beschriebenen Art erfindungsgemäß durch die kennzeichnenden Merkmale des Patentanspruchs 1 gelöst.

Weitere Merkmale, Vorteile und Einzelheiten der Erfindung ergeben sich aus den Unteransprüchen sowie der zeichnerischen Darstellung und nachfolgenden Beschreibung einer bevorzugten Ausführungsform der erfindungsgemäßen Verschlussvorrichtung.

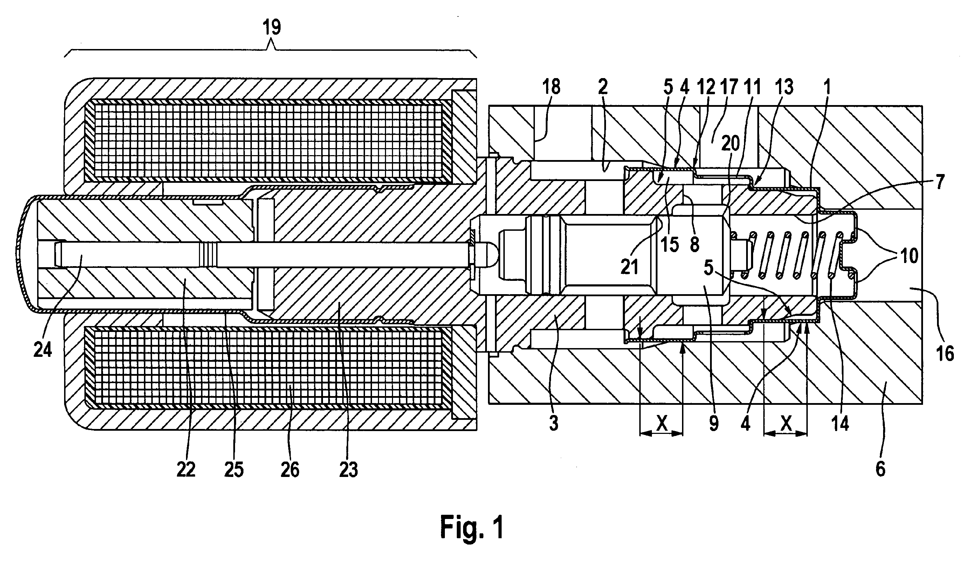

Die Figur 1 zeigt die erfindungsgemäße Verschlussvorrichtung im Längsschnitt zum Verschließen von druckmittelführenden Kanälen 16, 17, 18 in einem Gehäuse 6, in das ein patronenförmiger Verschlusskörper 3 druckmitteldicht eingesetzt ist. Zur Abdichtung des Verschlusskörpers 3 in einer für den Verschlusskörper 3 vorgesehenen Aufnahmebohrung 2 des Gehäuses 6 ist ein Dichtkörper zwischen dem Verschlusskörper 3 und der Aufnahmebohrung 2 angeordnet, der erfindungsgemäß als Hülsenkörper 1 ausgeführt ist, dessen Mantelfläche abschnittsweise unter einer definierten toleranzausgleichenden Flächenpressung zwischen der Aufnahmebohrung 2 und dem Verschlusskörper 3 angeordnet ist.

In Fügerichtung des Verschlusskörpers 3 ist sowohl die Aufnahmebohrung 2 als auch der Verschlusskörper 3 jeweils mit einem paar im Durchmesser abnehmenden Stufenabschnitte 4, 5 versehen. Zwischen den Stufenabschnitten 5 des Verschlusskörpers 3 und den Stufenabschnitten 4 der Aufnahmebohrung 2 ist ein Ringraum 15 vorgesehen, in dem sich der Hülsenkörper 1 zur Überbrückung eines zwischen den Stufenabschnitten 4, 5 bestehenden Axialabstands X erstreckt. Innerhalb des Ringraums 15 liegt der Hülsenkörper 1 hierbei vorteilhaft mit seiner Mantelfläche beiderseits der Querbohrung 11 wechselseitig an der Aufnahmebohrung 2 als auch am Verschlusskörper 1 unter radialer Vorspannung druckmitteldicht an. Die am Verschlusskörper 3 und an der Aufnahmebohrung 2 großzügig bemessenen wechselseitigen Anlagestellen des Hülsenkörpers 1 weisen einen Axialabstand X auf, der jeweils eine Überbrückung von einem grob tolerierten Axial- als auch Radialversatz zwischen den paarweise am Verschlusskörper 3 und der Aufnahmebohrung 2 vorgesehenen Stufenabschnitten 4, 5 ermöglicht.

Durch den Axialabstand X zwischen den wechselseitigen Anlagestellen des Hülsenkörpers 1 und infolge der radialen Vorspannkraft des aus einem elastischen Material, vorzugsweise Metall oder Kunststoff bestehenden Hülsenkörpers 1 ist somit gewährleistet, dass sowohl Axialals auch Radialabstände zwischen den Stufenabschnitten 4, 5 vom Hülsenkörper 1 flüssigkeitsdicht überbrückt werden, so dass Kurzschluss- bzw. Leckageströme zwischen dem Verschlusskörper 3 und der Aufnahmebohrung 2 auf einfache Weise ausgeschlossen sind.

Die radiale Elastizität und die Anlageflächen des Hülsenkörpers 1 als auch die Axial- und Radialabstände zwischen den Stufenabschnitten 4, 5 brauchen daher nur derart grob bemessen zu werden, dass unabhängig von Fertigungs- und Ausdehnungstoleranzen die gewünschte Dichtwirkung des Hülsenkörpers 1 gegenüber den in die Aufnahmebohrung 2 einmündenden Kanälen 16, 17, 18 gewährleistet ist.

Infolge der bevorzugten Verwendung von Metall ist der Hülsenkörper 1 vorteilhaft als im Tiefziehverfahren kostengünstig, präzise und kleinbauend hergestellter Hülsentopf ausgeführt, dessen durch Tiefziehen geformte Stufenkontur zu einem präzisen wechselseitigen Anlegen des Hülsenkörpers 1 an der Aufnahmebohrung und am Verschlusskörper 3 beiträgt.

Herstelltechnisch lässt sich der Hülsenkörper 1 entweder als am Verschlusskörper 3 oder als in der Aufnahmebohrung 2 vormontiertes Teil besonders einfach anordnen, wozu der Hülsenkörper 1 sich im Endbereich des Hülsentopfs mit einer Stufe entweder an der Stirnfläche des Verschlusskörpers 3 oder an einer im Endbereich der Aufnahmebohrung 2 ausgeführten Bohrungsstufe abstützt.

Der Verschlusskörper 3 ist zur Hindurchführung von Druckmittel mit Längs- und Querbohrungen 7, 8 versehen, wobei über ein in die Längsbohrung 7 des Verschlusskörpers 3 eingesetztes Ventilschließglied 9 eine schaltbare hydraulische Verbindung zwischen der Längs- und den Querbohrungen 7, 8 gewährleistet ist, wodurch ein bedarfsgerechter Druckmittelaustausch zwischen den Kanälen 16, 17, 18 zustande kommt.

Da sich der Hülsenkörper 1 zwischen den Stufenabschnitten 5 am Verschlusskörper 3 und den Stufenabschnitten 4 der Aufnahmebohrung 2 im Ringraum 15 erstreckt, weist auch der Hülsenkörper 1 zur Hindurchführung von Druckmittel wenigstens eine Längs- und Querbohrung 10, 11 auf, die sich zumindest abschnittsweise mit den Längs- und Querbohrungen 7, 8 des Verschlusskörpers 3 überdecken. Entsprechend der Abbildung durchdringt die Querbohrung 11 zwischen zwei Stufenabschnitten 12, 13 am Hülsenkörper 1 die Mantelfläche des Hülsenkörpers 1, während die Längsbohrung 10 vorteilhaft auf zwei außermittig in den Topfboden des Hülsenkörpers 1 einmündende Durchgangsöffnungen aufgeteilt ist.

Das Ventilschließglied 9 weist in vorliegendem Ausführungsbeispiel ein elektromagnetisch betätigbares Schieberventil auf, das auf der vom Magnetantrieb 19 abgewandten Stirnseite von einer Feder 14 beaufschlagt ist, die zwischen den beiden Durchgangsöffnungen sich am Topfboden des Hülsenkörpers 1 abstützt.

Durch die Wirkung der Feder 14 befindet sich das Ventilschließglied 9 im elektromagnetisch nicht erregten Zustand in einer Position, in der eine Hydraulikverbindung zwischen dem als Tankanschluss im Gehäuse 6 vorgesehenen Kanal 16 und dem als Arbeitsanschluss im Gehäuse 6 vorgesehenen Kanal 17 besteht. Das Ventilschließglied 9 ist hierzu mit seiner Steuerkante 21 von einer Steuerkante im Verschlusskörper 3 abgehoben, so dass über die Längsbohrungen 10 im Hülsentopf, die Längs- und Querbohrung 7, 8 im Verschlusskörper 3 und die Querbohrung 11 im Hülsenkörper 1 eine Verbindung zwischen den Kanälen 16, 17 besteht.

Bei elektromagnetischer Erregung des Ventilschließgliedes 9 ist die Verbindung zwischen den Kanälen 16, 17 je nach Überdeckungsgrad der zuvor erwähnten Steuerkanten entweder teilweise oder vollständig unterbrochen. Der für den Druckanschluss vorgesehene Kanal 18 steht erst dann mit dem für den Arbeitsanschluss vorgesehenen Kanal 17 in Verbindung, wenn eine weitere Steuerkante 22 am Ventilschließglied 9 die Querbohrung 8 im Verschlusskörper 3 freigibt. Der Magnetantrieb 19 sieht eine Proportionalsteuerung des Ventilschließgliedes 9 vor, so dass das Ventilschließglied 9 in jede beliebige Stellung gebracht werden kann. Der Magnetantrieb 19 befindet sich an dem aus dem Gehäuse 6 hervorstehenden Teil des Verschlusskörpers 9, der bevorzugt mittels einer selbsteinscherenden Verstemmung im äußeren Endbereich der Aufnahmebohrung 2 befestigt ist. Die verwendete Verstemmung hat überdies den Vorteil, dass für den Verschlusskörper am äußeren Endbereich eine dichte kraft- und formschlüssige Verbindung in Richtung der Atmosphäre zustande kommt.

Der aus der Aufnahmebohrung 2 hervorstehende Teil des Verschlusskörpers 3 übernimmt die Funktion eines einem Magnetanker 22 zugewandten Magnetkern 23, durch den sich ein Ventilstößel 24 auf das Ventilschließglied 9 erstreckt. Der Magnetanker 22 wird durch eine Ventilhülse 25 geführt, die am Magnetkern 23 befestigt ist. Der Außenumfang der Ventilhülse 25 ist von einer Magnetspule 26 umschlossen.

Die Erfindung ist nicht auf die beschriebene Verwendung der Verschlussvorrichtung zur Aufnahme von Ventilbauteilen beschränkt, sondern geht in der allgemeinsten Form von einem Verschlusskörper 3 in Form eines patronenförmigen Verschlussstopfens aus, der in eine mit wenigstens einem paar Kanälen versehene Aufnahmebohrung 2 eingesetzt ist, wobei zur Vermeidung von unerwünschten Strömungsverbindungen zwischen den Kanälen mit dem vorgestellten Hülsenkörper 1 eine einfache und dennoch sichere Abdichtung des Verschlusskörpers 3 in der Aufnahmebohrung 2 gewährleistet ist.

Die in Figur 1 gezeigte Integration eines Ventils im Verschlusskörper 3 stellt somit lediglich eine besonders zweckmäßige Ausgestaltung der Erfindung dar.

### Bezugszeichenliste

- 1: Hülsenkörper
- 2: Aufnahmebohrung
- 3: Verschlusskörper
- 4: Stufenabschnitt
- 5: Stufenabschnitt
- 6: Gehäuse
- 7: Längsbohrung
- 8: Querbohrung
- 9: Ventilschließglied
- 10: Längsbohrung
- 11: Querbohrung
- 12: Stufenabschnitt
- 13: Stufenabschnitt
- 14: Feder
- 15: Ringraum
- 16: Kanal
- 17: Kanal
- 18: Kanal
- 19: Magnetantrieb
- 20: Steuerkante
- 21: Steuerkante
- 22: Magnetanker
- 23: Magnetkern
- 24: Ventilstößel
- 25: Ventilhülse
- 26: Magnetspule
- X: Axialabstand

## Patentansprüche

1. Verschlussvorrichtung zum Verschließen von druckmittelführenden Kanälen in einem Gehäuse (6), in das ein patronenförmiger Verschlusskörper (3) druckmitteldicht eingesetzt ist, wobei zur Abdichtung des Verschlusskörpers (3) in einer für den Verschlusskörper (3) vorgesehenen Aufnahmebohrung (2) im Gehäuse (6) wenigstens ein als Hülsenkörper (1) ausgeführter Dichtkörper zwischen dem Verschlusskörper (3) und der Aufnahmebohrung (2) angeordnet ist, wobei die Mantelfläche des Hülsenkörpers (1) zur Abdichtung abschnittsweise unter einer definierten Flächenpressung zwischen der Aufnahmebohrung (2) und dem Verschlusskörper (3) angeordnet ist, **dadurch gekennzeichnet, dass** der Hülsenkörper (1), die Aufnahmebohrung (2) und der Verschlusskörper (3) mit in Fügerichtung des Verschlusskörpers (3) im Durchmesser abnehmende Stufenabschnitte (12, 13, 4, 5) versehen sind, und dass zwischen dem Stufenabschnitt (5) des Verschlusskörpers (3) und.dem Stufenabschnitt (4) der Aufnahmebohrung (2) ein Ringraum (15) vorgesehen ist, in dem der Hülsenkörper (1) wechselseitig in einem Abstand sowohl an der Aufnahmebohrung (2) als auch am Verschlusskörper (3) unter radialer Vorspannung druckmitteldicht anliegt, wobei der Abstand zwischen dem Stufenabschnitt (5) des Verschlusskörpers (3) und dem Stufenabschnitt (4) der Aufnahmebohrung (2) einem Axialabstand (X) entspricht, durch den unabhängig von Fertigungs- und Ausdehnungstoleranzen des Verschlusskörpers (3) und der Aufnahmebohrung (2) ein druckmitteldichter Verschluss des Gehäuses (6) gewährleistet ist.

2. Verschlussvorrichtung nach Anspruch 1, **dadurch gekennzeichnet, dass** der Hülsenkörper (1) aus einem elastischen Material, vorzugsweise Metall oder Kunststoff besteht.

3. Verschlussvorrichtung nach einem der vorangegangenen Ansprüche, **dadurch gekennzeichnet, dass** ein Radialabstand zwischen den Stufenabschnitten (4, 5) der Aufnahmebohrung (2) und des Verschlusskörpers (3) als auch die Elastizität des Hülsenkörpers (1) derart bemessen ist, dass unabhängig von Fertigungs- und Ausdehnungstoleranzen des Verschlusskörpers (3) und der Aufnahmebohrung (2) ein druckmitteldichter Verschluss des Gehäuses (6) durch den Hülsenkörper (1) gewährleistet ist.

4. Verschlussvorrichtung nach einem der vorangegangenen Ansprüche, **dadurch gekennzeichnet, dass** der Hülsenkörper (1) als im Tiefziehverfahren hergestellter Hülsentopf ausgeführt ist, dessen Topfboden an einer Stufe des Verschlusskörpers (3) und/oder an einer Stufe der Aufnahmebohrung (2) aufsetzbar ist.

5. Verschlussvorrichtung nach einem der vorangegangenen Ansprüche, **dadurch gekennzeichnet, dass** der Verschlusskörper (3) zur gezielten Hindurchführung von Druckmittel mit Längs- und Querbohrungen (7, 8) versehen ist.

6. Verschlussvorrichtung nach Anspruch 5, **dadurch gekennzeichnet, dass** in die Längsbohrung (7) des Verschlusskörpers (3) ein vorzugsweise elektromagnetisch betätigbares Ventilschließglied (9) eingesetzt ist, das eine schaltbare hydraulische Verbindung zwischen der Längs- und den Querbohrungen (7, 8) herstellt.

7. Verschlussvorrichtung nach einem der vorangegangenen Ansprüche, **dadurch gekennzeichnet, dass** der Hülsenkörper (1) zur Hindurchführung von Druckmittel mit wenigstens einer Längs- und Querbohrung (10, 11) versehen ist, die sich zumindest abschnittsweise mit den Längs- und Querbohrungen (7, 8) des Verschlusskörpers (3) überdecken.

8. Verschlussvorrichtung nach Anspruch 7, **dadurch gekennzeichnet, dass** die Querbohrung (11) zwischen zwei Stufenabschnitten (12, 13) am Hülsenkörper (1) die Mantelfläche des Hülsenkörpers (1) durchdringt.

9. Verschlussvorrichtung nach Anspruch 6, **dadurch gekennzeichnet, dass** das Ventilschließglied (9) als Schieber- und/oder Sitzventil ausgeführt ist, das von einer Feder (14) beaufschlagt ist, die sich am Topfboden des Hülsenkörpers (1) abstützt.

## Claims

1. Closing device for closing pressure-medium-conducting ducts in a housing (6) into which a cartridge-shaped closing element (3) is inserted in a pressure-medium-tight fashion, wherein, in order to seal the closing element (3) in a receptacle bore (2) which is provided in the housing (6) for the closing element (3), at least one sealing element which is embodied as a sleeve element (1) is arranged between the closing element (3) and the receptacle bore (2), wherein, for the purpose of forming a seal, the lateral surface of the sleeve element (1) is arranged in certain sections under a defined pressure per unit surface area between the receptacle bore (2) and the closing element (3), **characterized in that** the sleeve element (1), the receptacle bore (2) and the closing element (3) are provided with step sections (12, 13, 4, 5) which decrease in diameter in the joining direction of the closing element (3), and **in that** an annular space (15) is provided between the step section (5) of the closing element (3) and the step section (4) of the receptacle bore (2), in which annular space (15) the sleeve element (1) bears alternately in a pressure-medium-tight fashion at a distance both on the receptacle bore (2) and on the closing element (3) under radial prestress, wherein the distance between the step section (5) of the closing element (3) and the step section (4) of the receptacle bore (2) corresponds to an axial distance (X) which ensures pressure-medium-tight closure of the housing (6) independently of fabrication and expansion tolerances of the closing element (3) and of the receptacle bore (2).

2. Closing device according to Claim 1, **characterized in that** the sleeve element (1) is composed of an elastic material, preferably metal or plastic.

3. Closing device according to one of the preceding claims, **characterized in that** a radial distance between the step sections (4, 5) of the receptacle bore (2) and of the closing element (3) and the elasticity of the sleeve element (1) are dimensioned in such a way that pressure-medium-tight closure of the housing (6) is ensured by the sleeve element (1) independently of fabrication and expansion tolerances of the closing element (3) and of the receptacle bore (2).

4. Closing device according to one of the preceding claims, **characterized in that** the sleeve element (1) is embodied as a sleeve pot which is manufactured using a deep drawing method and whose pot base can be fitted onto a step in the closing element (3) and/or onto a step in the receptacle bore (2).

5. Closing device according to one of the preceding claims, **characterized in that** the closing element (3) is provided with longitudinal and lateral bores (7, 8) for the purpose of feeding through pressure medium in a selective fashion.

6. Closing device according to Claim 5, **characterized in that** a valve-closing element (9) which can preferably be activated electromagnetically, and which produces a switchable hydraulic connection between the longitudinal and lateral bores (7, 8), is inserted into the longitudinal bore (7) in the closing element (3).

7. Closing device according to one of the preceding claims, **characterized in that**, for the purpose of feeding through pressure medium, the sleeve element (1) is provided with at least one longitudinal and lateral bore (10, 11) which overlap at least in certain sections with the longitudinal and lateral bores (7, 8) of the closing element (3).

8. Closing device according to Claim 7, **characterized in that** the lateral bore (11) penetrates the lateral face of the sleeve element (1) between two step sections (12, 13) on the sleeve element (1).

9. Closing device according to Claim 6, **characterized in that** the valve-closing element (9) is embodied as a slide valve and/or seat valve on which a spring (14) which is supported on the pot base of the sleeve element (1) acts.

## Revendications

1. Dispositif obturateur pour fermer des canaux conduisant du fluide sous pression dans un boîtier (6), dans lequel un corps d'obturation (3) en forme de cartouche est inséré de manière étanche au fluide sous pression, au moins un corps d'étanchéité réalisé sous la forme d'un corps de douille (1) étant disposé, pour étancher le corps d'obturation (3) dans un alésage de réception (2) prévu dans le boîtier (6) pour le corps d'obturation (3), entre le corps d'obturation (3) et l'alésage de réception (2), la surface d'enveloppe du corps de douille (1) étant disposée pour l'étanchéité en partie avec une pression de surface définie entre l'alésage de réception (2) et le corps de fermeture (3), **caractérisé en ce que** le corps de douille (1), l'alésage de réception (2) et le corps de fermeture (3) sont pourvus de portions étagées (12, 13, 4, 5) dont le diamètre diminue dans la direction d'assemblage du corps d'obturation (3), et **en ce qu'**entre la portion étagée (5) du corps d'obturation (3) et la portion étagée (4) de l'alésage de réception (2) est prévu un espace annulaire (15), dans lequel le corps de douille (1) s'applique en alternance à une certaine distance à la fois contre l'alésage de réception (2) et contre le corps d'obturation (3) avec précontrainte radiale et de manière étanche au fluide de pression, la distance entre la portion étagée (5) du corps d'obturation (3) et la portion étagée (4) de l'alésage de réception (2) correspondant à une distance axiale (X) qui garantit une obturation étanche au fluide sous pression du boîtier (6) indépendamment des tolérances de fabrication et de dilatation du corps d'obturation (3) et de l'alésage de réception (2).

2. Dispositif obturateur selon la revendication 1, **caractérisé en ce que** le corps de douille (1) se compose d'un matériau élastique, de préférence de métal ou de plastique.

3. Dispositif obturateur selon l'une quelconque des revendications précédentes, **caractérisé en ce qu'**une distance radiale entre les portions étagées (4, 5) de l'alésage de réception (2) et du corps d'obturation (3) ainsi que l'élasticité du corps de douille (1) sont dimensionnées de telle sorte qu'une obturation étanche au fluide sous pression du boîtier (6) par le corps de douille (1) soit garantie indépendamment des tolérances de fabrication et de dilatation du corps d'obturation (3) et de l'alésage de réception (2).

4. Dispositif obturateur selon l'une quelconque des revendications précédentes, **caractérisé en ce que** le corps de douille (1) est réalisé sous la forme d'un pot de douille fabriqué par emboutissage profond, dont le fond de pot peut être posé contre un étage du corps d'obturation (3) et/ou contre un étage de l'alésage de réception (2).

5. Dispositif obturateur selon l'une quelconque des revendications précédentes, **caractérisé en ce que** le corps de fermeture (3) est pourvu d'alésages longitudinaux et transversaux (7, 8) pour assurer un guidage ciblé du fluide sous pression.

6. Dispositif obturateur selon la revendication 5, **caractérisé en ce qu'**un organe d'obturation de soupape (9) pouvant être actionné de préférence de manière électromagnétique est inséré dans l'alésage longitudinal (7) du corps d'obturation (3) et crée une connexion hydraulique commutable entre les alésages longitudinal et transversal (7, 8).

7. Dispositif obturateur selon l'une quelconque des revendications précédentes, **caractérisé en ce que** le corps de douille (1) est pourvu d'au moins un alésage longitudinal et d'un alésage transversal (10, 11) pour le guidage de fluide sous pression, lesquels alésages coïncident au moins en partie avec les alésages longitudinal et transversal (7, 8) du corps d'obturation (3).

8. Dispositif obturateur selon la revendication 7, **caractérisé en ce que** l'alésage transversal (11) traverse la surface d'enveloppe du corps de douille (1) entre deux portions étagées (12, 13) sur le corps de douille (1).

9. Dispositif obturateur selon la revendication 6, **caractérisé en ce que** l'organe d'obturation de soupape (9) est réalisé sous la forme d'une soupape à tiroir et/ou à siège, qui est sollicitée par un ressort (14) qui s'appuie sur le fond de pot du corps de douille (1).
